(19) Europäisches Patentamt
European Patent Office
Office européen des brevets

(11) EP 3 321 829 A1

(12) EUROPEAN PATENT APPLICATION

(43) Date of publication:
16.05.2018 Bulletin 2018/20

(51) Int Cl.:
G06F 17/50 (2006.01)

(21) Application number: 17198265.5

(22) Date of filing: 25.10.2017

(84) Designated Contracting States:
AL AT BE BG CH CY CZ DE DK EE ES FI FR GB GR HR HU IE IS IT LI LT LU LV MC MK MT NL NO PL PT RO RS SE SI SK SM TR
Designated Extension States:
BA ME
Designated Validation States:
MA MD

(30) Priority: 09.11.2016 JP 2016219104

(71) Applicant: FUJITSU LIMITED
Kanagawa 211-8588 (JP)

(72) Inventor: Furuya, Atsushi
Kanagawa, 211-8588 (JP)

(74) Representative: Hoffmann Eitle
Patent- und Rechtsanwälte PartmbB
Arabellastraße 30
81925 München (DE)

(54) MAGNETIC MATERIAL SIMULATION PROGRAM, MAGNETIC MATERIAL SIMULATION METHOD, AND MAGNETIC MATERIAL SIMULATION APPARATUS

(57) Based on a parameter, a first electric charge, and a first magnetic field, a calculating unit (142) of a magnetic material simulation apparatus (100) calculates a second electric charge of a crystal grain model at a specific point in time. Based on the parameter, the first electric charge, the second electric charge, and a first magnetic flux density, the calculating unit (142) calculates a second magnetic field and a second magnetic flux density of the crystal grain model at the specific point in time. Based on the second electric charge, the second magnetic field, and the second magnetic flux density, the calculating unit (142) calculates a third electric charge, a third magnetic field, and a third magnetic flux density of the crystal grain model at a following point in time.

FIG.9

```
              START
                │
        READ PARAMETERS            ~S101
                │
     INITIALIZE H[i], B[i], Q[i], AND t   ~S102
                │
   ASSIGN INITIAL VALUE OF H[i] TO H0[i];
   ASSIGN INITIAL VALUE OF B[i] TO B0[i];
                AND                        ~S103
   ASSIGN INITIAL VALUE OF Q[i] TO Q0[i]
                │
        CALCULATE Q[i]             ~S104
                │
  CALCULATE H[i] AND B[i] BY USING Q[i]   ~S105
                │
   REGISTER Q[i], H[i], AND B[i] INTO
   ELECTRIC CURRENT HISTORY DATA          ~S106
   SO AS TO BE KEPT IN
   CORRESPONDENCE WITH t
                │
            t=t+Δt                 ~S107
                │
                             S108
        IS ENDING CONDITION        ──NO──┐
          SATISFIED?                      │
                │YES  S110               S109
                │              ASSIGN H[i] OBTAINED AT IMMEDIATELY-
   OUTPUT CALCULATION RESULTS     PRECEDING STEP TO H0[i];
                │              ASSIGN B[i] OBTAINED AT IMMEDIATELY-
                │                PRECEDING STEP TO B0[i]; AND
                │              ASSIGN Q[i] OBTAINED AT IMMEDIATELY-
              END                PRECEDING STEP TO Q0[i]
```

EP 3 321 829 A1

**Description**

FIELD

The embodiments discussed herein are related to a magnetic material simulation program and the like.

BACKGROUND

In circuits of electric devices, component parts such as inductors and transformers are configured by using magnetic materials (e.g., ferrite) having a high specific resistance. In particular, in an endeavor to make a device compact or the like, the switching frequency of the circuit itself is arranged to be higher for the purpose of efficiently using the magnetic material.

Further, while circuits are arranged to have a higher frequency, there is also a demand for being able to predict, with a high level of precision, losses of the magnetic material driven in the circuits. To make each circuit compact and highly efficient, it is desirable to be able to learn the losses that occur when the circuit is driven in the order of MHz.

In transformers and inductors configured by using a high-resistance magnetic material, losses occur due to a resonance phenomenon caused by a domain wall or the like or a dynamic magnetization process such as ferromagnetic resonance. For instance, examples of the losses of magnetic materials include a hysteresis loss, an eddy current loss, and a residual loss.

Examples of techniques for simulating a residual loss in a circuit arranged to have a higher frequency include Related Technique 1. According to Related Technique 1, the size of a mesh for the inside of crystal grains of a magnetic material is arranged to be a size of microns, so that the frequency dependency of an electric resistance is measured for each of the sections of the mesh to simulate the residual loss.

Non Patent Document 1: F. Fiorillo, et al.: "Eddy-Current Losses in Mn-Zn Ferrites" IEEE Transactions on Magnetics, Vol. 50, No. 1 (2014), 6300109

When the related technique described above is used, however, a problem remains where it takes a long time to perform the calculation when the losses of the magnetic material need to be calculated accurately.

For example, while Related Technique 1 is used, when the mesh size is larger than expected, it becomes impossible to accurately calculate the losses due to an accumulation of electric charges caused by a dielectric action of the magnetic material. For this reason, calculating the losses accurately during a simulation process involves re-measuring of the frequency dependency in accordance with the mesh size, which makes it impossible to calculate the losses of the magnetic material in a prompt manner.

In principle, it is considered possible to calculate the losses of a magnetic material by solving Maxwell's equations. However, because the calculation is performed based on a huge number of mesh sections while taking dielectric materials in grain boundaries into consideration, it takes a long time to obtain calculation results.

Accordingly, it is an object in one aspect of an embodiment of the invention to provide a magnetic material simulation program, a magnetic material simulation method, and a magnetic material simulation apparatus that are capable of accurately calculating the losses of the magnetic material without spending much time on the calculation.

SUMMARY

According to an aspect of the embodiments, a magnetic material simulation program causes a computer to execute a process including: calculating a second electric charge at a specific point in time with respect to a crystal grain model obtained by dividing a magnetic material into sections having a predetermined mesh size, based on a parameter related to the crystal grain model, a first electric charge previously applied to the crystal grain model, and a first magnetic field that previously occurred to the crystal grain model; calculating a second magnetic field and a second magnetic flux density of the crystal grain model at the specific point in time, based on the parameter, the first electric charge, the second electric charge, and a first magnetic flux density that previously occurred to the crystal grain model; recording information related to the second electric charge, the second magnetic field, and the second magnetic flux density into a storage device; and repeatedly performing a process of calculating a third electric charge, a third magnetic field, and a third magnetic flux density of the crystal grain model at a following point in time, based on the second electric charge, the second magnetic field, and the second magnetic flux density.

BRIEF DESCRIPTION OF DRAWINGS

FIG. 1 is a drawing illustrating a simplified model of crystal grains that are electrically insulated from one another;

FIG. 2 is a diagram illustrating a circuit model corresponding to an element of the crystal grain model;

FIG. 3 is a diagram illustrating dividing of a ferrite core of which the thickness is h and an example of an arrangement of variable values;

FIG. 4 is a functional block diagram illustrating a configuration of a magnetic material simulation apparatus according to an embodiment;

FIG. 5 is a table illustrating an example of a data structure of parameters;

FIG. 6 is a table illustrating an example of a data structure of electric current history data;

FIG. 7 presents charts each illustrating an example of a result of a BH loop calculation;

FIG. 8 presents charts each illustrating an example of a measurement result from a BH loop experiment;

FIG. 9 is a flowchart illustrating a processing procedure performed by the magnetic material simulation apparatus according to the embodiment; and

FIG. 10 is a diagram illustrating an example of a hardware configuration of a computer configured to realize the same functions as those of the magnetic material simulation apparatus.

DESCRIPTION OF EMBODIMENTS

Preferred embodiments will be explained with reference to accompanying drawings. The present disclosure is not limited by these embodiments.

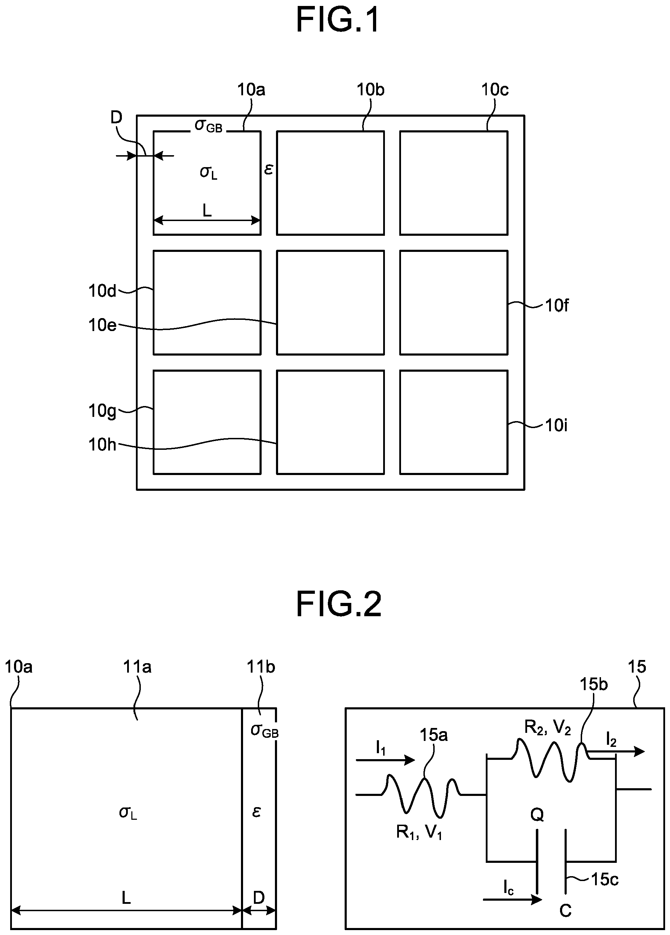

Before explaining the embodiments, a method for handling, in a simplified manner, resonance phenomena dependent on model sizes will be explained, by which a residual loss dependent on shapes is expressed in a model by using the following method. FIG. 1 is a drawing illustrating a simplified model of crystal grains that are electrically insulated from one another. For example, these crystal grains are crystal grains of a magnetic material such as ferrite. The example in FIG. 1 illustrates model elements 10a to 10i each representing a crystal grain.

In the present example, parameters are defined as follows:

The thickness of the crystal grain boundary: D;
The electric conductivity of the crystal grain boundary: $\sigma_{GB}$;
The electric conductivity inside a crystal grain: $\sigma_L$;
The size of the crystal grain: L;
The permittivity of crystal grain boundary: $\varepsilon$; and
The dimension ratio: r (= D/L).

FIG. 2 is a diagram illustrating a circuit model corresponding to one of the model elements each representing a crystal grain. As an example, FIG. 2 illustrates a circuit model 15 corresponding to the model element 10a representing a crystal grain. By using the circuit model 15, it is similarly possible to express each of the other model elements 10b to 10i representing the crystal grains.

Instead of performing a calculation by finely dividing crystal grains and crystal grain boundaries with the use of a mesh, the circuit model 15 equivalent to the model element representing a crystal grain is used, so as to derive a relationship between an electric field E and an electric current density (hereinafter, "current density") j framed in a coarse perspective satisfying the circuit model 15. For example, equations satisfied by the circuit model 15 are presented as Expressions (1) to (6) below.

$$V = V_1 + V_2 \tag{1}$$

$$I_1 = I_2 + I_c \tag{2}$$

$$V_1 = R_1 I_1 \tag{3}$$

$$V_2 = R_2 I_2 \tag{4}$$

$$Q = C V_2 \tag{5}$$

$$I_c = \frac{dQ}{dt} \tag{6}$$

In FIG. 2, the circuit model 15 includes resistors 15a and 15b and a capacitor 15c. The resistance value of the resistor 15a is expressed as $R_1$. The electric current flowing through the resistor 15a is expressed as $I_1$. The voltage applied to the resistor 15a is expressed as $V_1$. The resistance value of the resistor 15b is expressed as $R_2$. The electric current flowing through the resistor 15b is expressed as $I_2$. The voltage applied to the resistor 15b is expressed as $V_2$. The electric current flowing through the capacitor 15c is expressed as $I_c$. The capacity of the capacitor 15c is expressed as C. The electric charge of the capacitor 15c is expressed as Q.

In FIG. 2, by using a correspondence relationship between Expressions (1) to (6) based on the circuit model 15 and the model element 10a representing the crystal grain, Expressions (7) to (17) can be derived.

$$R_1 = \frac{1}{\sigma_L L} \tag{7}$$

$$R_2 = \frac{D}{\sigma_{GB} L^2} \tag{8}$$

$$C = \varepsilon \frac{L^2}{D} \tag{9}$$

$$Q = q L^2 \tag{10}$$

$$EL = V \tag{11}$$

$$V_1 = \frac{1}{\sigma_L L} j_1 L^2 \tag{12}$$

$$V_2 = \frac{D}{\sigma_{GB} L^2} j_2 L^2 \tag{13}$$

$$j_1 L^2 = I_1 \tag{14}$$

$$I_2 + I_c = j_2 L^2 + \frac{dQ}{dt} \tag{15}$$

$$\frac{\vec{J}}{\sigma_L} + \left(\frac{r}{\varepsilon}\right) \vec{q} = \vec{E} \tag{16}$$

$$\vec{q} = \int_0^t \vec{J} - \frac{\vec{q}}{\varepsilon} \sigma_{GB} dt \tag{17}$$

Expressions (7) to (17) are each defined with components in one direction. On the assumption that Expressions (7) to (17) are true for each of x-, y-, and z-directions, it is possible to express the relationship between the electric field E and the current density j when the electric field E is applied to the model element 10a representing the crystal grain, by using Expression (16).

The element "q" in Expression (16) is a variable denoting a history in the past and can be expressed by Expression (17).

Next, the derivation of Expressions (16) and (17) will be explained. Expression (18) is derived from the relationships expressed in Expressions (1) to (15). Further, Expression (19) related to the electric field E is derived from Expression (18). In Expression (19), the intra-grain current $i_1$ denotes the electric current flowing inside the crystal grain 11a indicated by the model element 10a representing the crystal grain. The grain boundary current $i_2$ is the electric current flowing through the grain boundary 11b of the model element 10a representing the crystal grain.

$$EL = V = V_1 + V_2 = \frac{1}{\sigma_L L} i_1 L^2 + \frac{D}{\sigma_{GB} L^2} i_2 L^2 \tag{18}$$

$$E = \frac{1}{\sigma_L} i_1 + \frac{r}{\sigma_{GB}} i_2 \tag{19}$$

Expression (20) is derived from the relationships expressed in Expressions (1) to (15). Further, Expression (21) related to the intra-grain current $i_1$ is derived from Expression (20).

$$j_1 L^2 = I_1 = I_2 + I_c = i_2 L^2 + \frac{dQ}{dt} \tag{20}$$

$$i_1 = i_2 + \frac{dq}{dt} \tag{21}$$

Next, the derivation of the grain boundary current $i_2$ in Expressions (19) and (21) will be explained. Expression (22) is derived from the relationships expressed in Expressions (4) and (5). It is possible to express Expression (22) by using Expression (23). Expression (24) is obtained by deforming Expression (23).

$$R_2 I_2 = \frac{Q}{C} \tag{22}$$

$$\frac{i_2}{\sigma_{GB}} = \frac{q}{\varepsilon} \tag{23}$$

$$i_2 = \frac{q}{\varepsilon} i_1 \tag{24}$$

By assigning Expression (24) to Expression (19), Expression (25) is obtained. The symbol $\varepsilon_r$ in Expression (25) denotes relative permittivity. The vacuum permittivity $\varepsilon_0$ denotes permittivity in vacuum. For example, the product of the relative permittivity $\varepsilon_r$ and the vacuum permittivity $\varepsilon_0$ corresponds to $\varepsilon$. By assigning Expression (24) to Expression (21), Expression (26) is obtained. Expression (25) corresponds to Expression (16). Expression (26) corresponds to Expression (17).

$$\vec{E} = \frac{1}{\sigma_L} \vec{i_1} + \frac{r}{\varepsilon_r \varepsilon_0} \vec{q} \tag{25}$$

$$\frac{d\vec{q}}{dt} = \vec{i_1} - \frac{\vec{q}}{\varepsilon} \sigma_{GB} \tag{26}$$

Returning to the description of Expressions (16) and (17), it is possible to calculate an accumulation of electric charges caused by dielectric materials on the crystal grain boundary surface, by coupling Expressions (16) and (17) as Maxwell's equations, without the need to generate a mesh corresponding to the crystal grain size. Further, on the assumption that magnetization within the crystal grain and the magnetic flux density each have a linear transmittance with respect to the magnetic field and that the degree of unlikeliness to be magnetized by a domain wall displacement is proportional to a time differential of the magnetic flux density, Expression (27) is derived.

$$\frac{\vec{B}}{\mu} + \frac{c_\beta}{\mu 0}\frac{d\vec{B}}{dt} = \vec{H} \qquad (27)$$

In Expression (27), the symbol $\mu$ denotes permittivity, whereas the symbol $\mu_0$ denotes vacuum permittivity. The symbol $C_\beta$ is a parameter indicating the degree of unlikeliness to be magnetized by a domain wall displacement. While the calculation in Expression (27) is performed by using a time-growth method, a loss value is calculated for each element by using the expressions presented below. In this situation, although the element q may be calculated by using Expression (17), because the value of q at an immediately-preceding step includes history information, it is also possible to use Expression (28).

$$\frac{d\vec{q}}{dt} = \vec{J} - \frac{\vec{q}}{\varepsilon}\sigma_{GB} \qquad (28)$$

Next, expressions used for calculating a magnetization excitation characteristic (a B-H curve) and a loss value with respect to a Mn-Zn ferrite core having a thickness of h will be explained. In the following explanations, the thickness direction will be referred to as a Y-direction, whereas the direction in which the magnetic field is applied will be referred to as an X-direction, and the direction in which the electric current is flowing will be referred to as a Z-direction.
A relational expression between the magnetic field H and the current density j can be represented by Expression (29) according to the Ampere's Law.

$$-\frac{\partial H}{\partial y} = j \qquad (29)$$

To express the relationship between the magnetic field H and the current density j, Expression (30) is derived from Expression (28) and the Ampere's Law.

$$\frac{1}{\sigma_L}\frac{\partial j}{\partial y} + \frac{r}{\varepsilon}\frac{\partial q}{\partial y} = -\frac{\partial B}{\partial t} \qquad (30)$$

From the relationships expressed in Expressions (29) and (30), Expression (31) is derived by eliminating the current density j.

$$-\frac{1}{\sigma_L}\frac{\partial^2 H}{\partial y^2} + \frac{r}{\varepsilon}q = -\frac{\partial B}{\partial t} \qquad (31)$$

In conclusion, the relationship of the magnetic field H of the ferrite core having a thickness of h can be expressed by Expression (22). The relationship of the magnetic flux density B of the ferrite core having a thickness of h can be expressed by Expression (27). The relationship of the electric charge Q of the ferrite core having a thickness of h can be expressed by Expression (28).

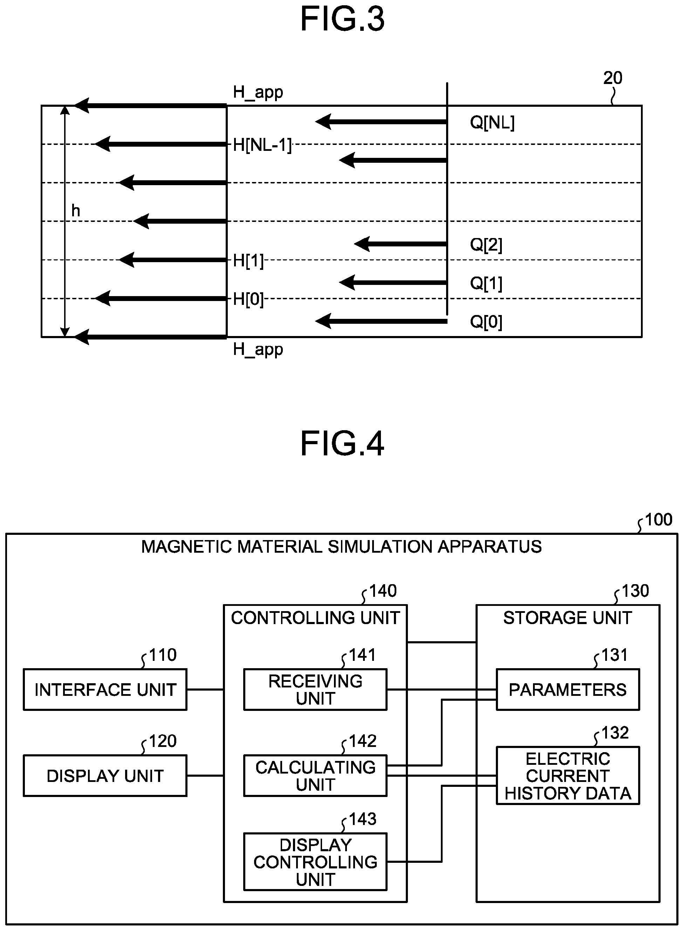

FIG. 3 is a diagram illustrating dividing of the ferrite core of which the thickness is h and an example of an arrangement of variable values. As illustrated in FIG. 3, magnetic field values H[i], magnetic flux density values B[i], and electric charge values Q[i] are placed at the nodes obtained by dividing a ferrite core 20 into sections of which the quantity is equal to NL. The electric charge Q[i] corresponds to an electric current history from the past.
The magnetic field values H[i] are handled as an array on computers, where the values of i are 0, 1, 2, ..., and NL-1. The magnetic flux density values B[i] and the electric charge values Q[i] are positioned at the middle points of the nodes, where the values of i are 0, 1, 2, ..., NL-1, and NL.

Because the magnetic field values H[i], the magnetic flux density values B[i], and the electric charge values Q[i] are each calculated from a time differential, the values are calculated once every certain time period expressed as $\Delta$t. The magnetic field calculated at an immediately-preceding step will be referred to as a magnetic field H0[i]. The magnetic flux density calculated at an immediately-preceding step will be referred to as a magnetic flux density B0[i]. The electric charge calculated at an immediately-preceding step will be referred to as an electric charge Q0[i]. Accordingly, it is possible to express a relational expression among the magnetic field H expressed in Expression (22), the magnetic flux density B expressed in Expression (27), and the electric charge Q expressed in Expression (28), as described below depending on the value of i.

When the value of i is "0", it is possible to calculate the magnetic field H, the electric charge Q, and the magnetic flux density B by using Expressions (32), (33), and (34), respectively.

$$\frac{H[1] - 2H[0] + H\_app}{\Delta h^2} = \sigma_L \left( \frac{B[0] - B0[0]}{\Delta t} - \frac{r}{\varepsilon} \frac{Q[1] - Q[0]}{\Delta h} \right) \quad (32)$$

$$\frac{Q[0] - Q0[0]}{\Delta t} = \sigma_L \left( \frac{H[0] - H\_app}{\Delta h} \right) - \frac{Q[0]}{\varepsilon} \sigma_{GB} \quad (33)$$

$$\frac{B[0]}{\mu} + \frac{c_\beta}{\mu 0} \frac{B[0] - B0[0]}{\Delta t} = H[0] \quad (34)$$

When the value of i is "neither 0 nor NL-1", it is possible to calculate the magnetic field H, the electric charge Q, and the magnetic flux density B by using Expressions (35), (36), and (37), respectively.

$$\frac{H[i+1] - H[i] - H[i-1]}{\Delta h^2} = \sigma_L \left( \frac{B[i] - B0[i]}{\Delta t} - \frac{r}{\varepsilon} \frac{Q[i+1] - Q[i]}{\Delta h} \right) \quad (35)$$

$$\frac{Q[i] - Q0[i]}{\Delta t} = \sigma_L \left( \frac{H[i] - H[i-1]}{\Delta h} \right) - \frac{Q[i]}{\varepsilon} \sigma_{GB} \quad (36)$$

$$\frac{B[i]}{\mu} + \frac{c_\beta}{\mu 0} \frac{B[i] - B0[i]}{\Delta t} = H[i] \quad (37)$$

When the value of i is "NL-1", it is possible to calculate the magnetic field H, the electric charge Q, and the magnetic flux density B by using Expressions (38), (39), (40), and (41).

$$\frac{H\_app - 2H[NL-1] + H[NL-2]}{\Delta h^2} = \sigma_L \left( \frac{B[NL-1] - B0[NL-1]}{\Delta t} - \frac{r}{\varepsilon} \frac{Q[NL] - Q[NL-1]}{\Delta h} \right) \quad (38)$$

$$\frac{Q[NL-1] - Q0[NL-1]}{\Delta t} = \sigma_L \left( \frac{H[NL-1] - H[NL-2]}{\Delta h} \right) - \frac{Q[NL-1]}{\varepsilon} \sigma_{GB} \quad (39)$$

$$\frac{Q[NL] - Q0[NL]}{\Delta t} = \sigma_L\left(\frac{H\_app - H[NL - 1]}{\Delta h}\right) - \frac{Q[NL]}{\varepsilon}\sigma_{GB} \qquad (40)$$

$$\frac{B[NL - 1]}{\mu} + \frac{c_\beta}{\mu 0}\frac{B[NL - 1] - B0[NL - 1]}{\Delta t} = H[NL - 1] \qquad (41)$$

Next, a magnetic material simulation apparatus according to the present embodiment will be explained. The magnetic material simulation apparatus according to the present embodiment is configured to calculate the magnetic field H, the electric charge Q, and the magnetic flux density B of a magnetic material based on Expressions (32) to (41) above.

FIG. 4 is a functional block diagram illustrating a configuration of the magnetic material simulation apparatus according to the present embodiment. As illustrated in FIG. 4, a magnetic material simulation apparatus 100 includes an interface unit 110, a display unit 120, a storage unit 130, and a controlling unit 140.

The interface unit 110 is a processing unit connected to an external apparatus (not illustrated) and an input apparatus such as a keyboard, a touch panel, and/or the like and is configured to receive various types of information. For example, the interface unit 110 receives parameters 131 and outputs the received parameters 131 to the controlling unit 140.

The display unit 120 is a display device configured to display information output from the controlling unit 140. The display unit 120 corresponds to, for example, a liquid crystal display device or a touch panel.

The storage unit 130 includes the parameters 131 and electric current history data 132. The storage unit 130 corresponds to a semiconductor memory element such as a Random Access Memory (RAM), a Read-Only Memory (ROM), or a flash memory, or a storage device such as a Hard Disk Drive.

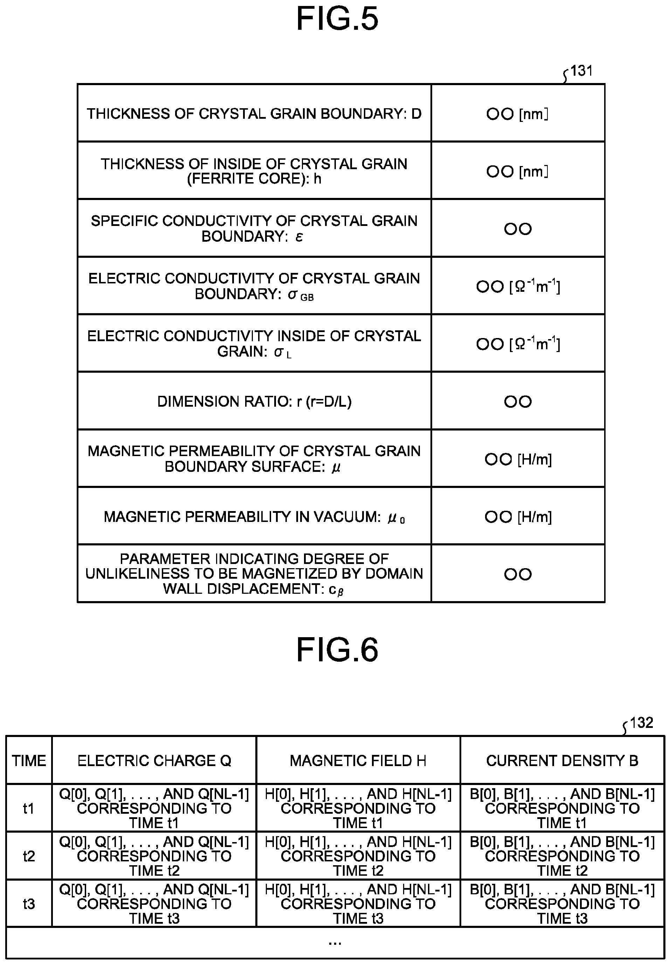

The parameters 131 are parameters for a magnetic material that are used when a calculating unit 142 (explained later) calculates the magnetic field H, the electric charge Q, and the magnetic flux density B. FIG. 5 is a table illustrating an example of a data structure of the parameters. As illustrated in FIG. 5, the parameters 131 include the thickness D of a crystal grain boundary, the thickness h of the inside of a crystal grain, the relative permittivity $\varepsilon$ of the crystal grain boundary, the electric conductivity $\sigma_{GB}$ of the crystal grain boundary, the electric conductivity $\sigma_L$ inside the crystal grain, and a dimension ratio r. The dimension ratio r corresponds to a value obtained by dividing the thickness D of the crystal grain boundary by the size L of the crystal grain. The parameters 131 include the magnetic permeability $\mu$ on the crystal grain boundary surface, the vacuum magnetic permeability $\mu_0$, and the parameter $C_\beta$ indicating the degree of unlikeliness to be magnetized by a domain wall displacement.

The electric current history data 132 stores therein information related to values of the electric charge Q, the magnetic field H, and the current density B that are calculated at each of different points in time. FIG. 6 is a table illustrating an example of a data structure of the electric current history data. As illustrated in FIG. 6, the electric current history data 132 keeps times in correspondence with the electric charge values Q[0], ..., and Q[NL-1], the magnetic field values H[0], ..., and H[NL-1], and the current density values B[0], ..., and B[NL-1].

The controlling unit 140 includes a receiving unit 141, the calculating unit 142, and a display controlling unit 143. The controlling unit 140 may be realized with a Central Processing Unit (CPU) or a Micro Processing Unit (MPU). Alternatively, the controlling unit 140 may be realized with hard wired logic such as an Application Specific Integrated Circuit (ASIC) or a Field Programmable Gate Array (FPGA).

The receiving unit 141 is a processing unit configured to receive the parameters 131 either from the external apparatus or the input apparatus via the interface unit 110. The receiving unit 141 registers the received parameters 131 into the storage unit 130. Further, when having received update data for the parameters 131, the receiving unit 141 updates the parameters 131 with the received update data.

The calculating unit 142 is a processing unit configured to repeatedly calculate values of the magnetic field H, the electric charge Q, and the magnetic flux density B of the magnetic material at each of different points in time, based on the parameters 131 and Expressions (32) to (41) presented above, and to register results of the calculations into the electric current history data 132. Expressions (32) to (41) are simultaneous linear equations with respect to the magnetic field H[i], the electric charge Q[i], and the magnetic flux density B[i]. In the following sections, an example of a processing procedure performed by the calculating unit 142 will be explained.

By using Expressions (32) to (41), the calculating unit 142 assigns the magnetic field H[i] at an immediately-preceding step to the magnetic field H0[i]. The calculating unit 142 assigns the electric charge Q[i] at an immediately-preceding step to the electric charge Q0[i]. The calculating unit 142 assigns the magnetic flux density B[i] at an immediately-preceding step to the magnetic flux density B0[i]. When performing the process for the first time, the calculating unit 142 assigns an initial value to the magnetic field H0[i], the electric charge Q0[i], and the magnetic flux density B0[i]. The initial value is a value that is set by an administrator in advance and may be "0", for example.

By using Expressions (32) to (41), the calculating unit 142 determines the value of Δh as "Δh = h/NL". Further, the calculating unit 142 uses a value set by the administrator as the value of Δt. For example, let us assume that "Δt = $1 \times 10^{-7}$ (s)" is satisfied. The element H_app denotes a value of the magnetic field H on the surface, and a value set in advance is used.

First, the calculating unit 142 calculates the electric charge Q[i] indicating an electric current history from the past, according to the value of i. More specifically, based on Expression (33), the calculating unit 142 calculates the electric charge Q[0] indicating the electric current history from the past. Based on Expression (36), the calculating unit 142 calculates the electric charge values Q[1] to Q[NL-2] each indicating an electric current history from the past. Based on Expressions (39) and (40), the calculating unit 142 calculates the electric charge Q[NL-1]. When calculating the electric charge Q[i] indicating the electric current history from the past, the calculating unit 142 performs the calculation by substituting H[i] with H0[i].

The calculating unit 142 registers the present time t and the electric charge value Q[i] (where i = 0 to NL-1) indicating the electric current history from the past into the electric current history data 132 so as to be kept in correspondence with each other. According to the value of i, the calculating unit 142 calculates the magnetic field H[i] and the magnetic flux density B[i] corresponding to the present time t, based on the calculation result of the electric charge Q[i] with respect to the present time t.

Based on Expressions (32) and (34), the calculating unit 142 calculates the magnetic field H[0] and the magnetic flux density B[0]. In this situation, in Expression (32), the calculating unit 142 may use the value of H0[1] obtained at an immediately-preceding step as the value of H[1] or may use a value estimated by using a different related method as the value of H[1].

After calculating the magnetic field H[0] and the magnetic flux density B[0], the calculating unit 142 calculates the magnetic field values H[1] to H[NL-2] and the magnetic flux density values B[1] to B[NL-2] based on Expressions (35) and (37). In Expression (35), as the value of H[i+1], the calculating unit 142 may use the value of H0[i+1] obtained at the immediately-preceding step or may use a value obtained by performing an interpolation calculation on H[i] and H[i+1].

After calculating the magnetic field values H[i] (where i = 0 to NL-2) and the magnetic flux density values B[i] (where i = 0 to NL-2), the calculating unit 142 calculates the magnetic field H[NL-1] and the magnetic flux density B[NL-1], based on Expressions (38) and (41).

The calculating unit 142 registers the present time t, the magnetic field values H[i] (where i = 0 to NL-1) and the magnetic flux density values B[i] (where i = 0 to NL-1) into the electric current history data 132 so as to be kept in correspondence with one another.

The calculating unit 142 updates the present time t by adding Δt to the present time t. By repeatedly performing the process described above, the calculating unit 142 calculates the electric charge Q[i], the magnetic field H[i], and the magnetic flux density B[i] at each of the different points in time.

As mentioned above, when performing the process for the first time, the calculating unit 142 uses the initial value as each of the values of Q0[i], H0[i], and B0[i]. In the process performed for the second time and thereafter, the calculating unit 142 uses the values of Q[i], H[i], and B[i] obtained at the immediately-preceding step as the values of the Q0[i], H0[i], and B0[i], respectively. When the present time is expressed as t, Q[i], H[i], and B[i] obtained at the immediately-preceding step are the values of Q[i], H[i], and B[i] at the time "t - Δt", respectively.

When the numerical values are unstable, the calculating unit 142 may calculate the values of H[i], Q[i], and B[i] (where i = 0 to NL-1) as linear equations, because Expressions (32) to (41) are simultaneous linear equations with respect to the magnetic field H, the electric charge Q, and the magnetic flux density B.

The display controlling unit 143 is a processing unit configured to cause the display unit 120 to display a calculation result of a BH loop based on the electric current history data 132. The BH loop indicates a relationship between magnetic field values H_app applied to the boundary of the ferrite core and magnetic field density values B exhibited at the times of application.

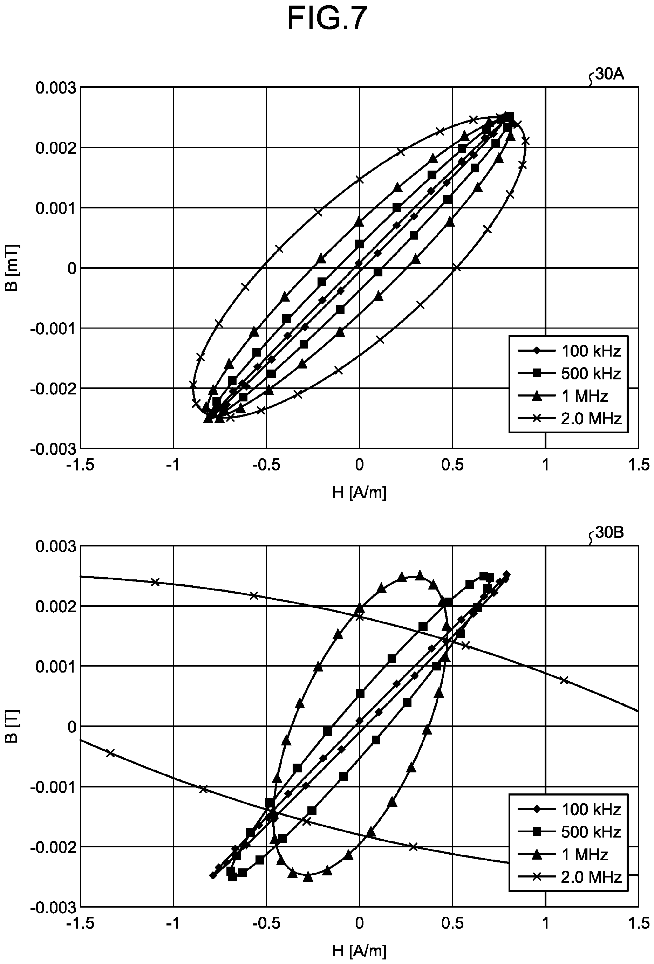

FIG. 7 presents charts each illustrating an example of a result of the BH loop calculation. FIG. 7 presents a calculation result 30A and a calculation result 30B as examples. The calculation result 30A is a result of a calculation obtained when the thickness h of the inside of the crystal grain is 3 nm, whereas the calculation result 30B is a result of a calculation obtained when the thickness h of the inside of the crystal grain is 13 nm.

In the calculation results 30A and 30B illustrated in FIG. 7, the horizontal axis is an axis corresponding to the magnetic field values H_app applied to the ferrite core. The vertical axis is an axis corresponding to an average value of the magnetic flux density values B. The examples in FIG. 7 illustrate the calculation results obtained when H_app is varied in the form of mutually-different sine waves (100 kHz, 500 kHz, 1 MHz, and 2 MHz).

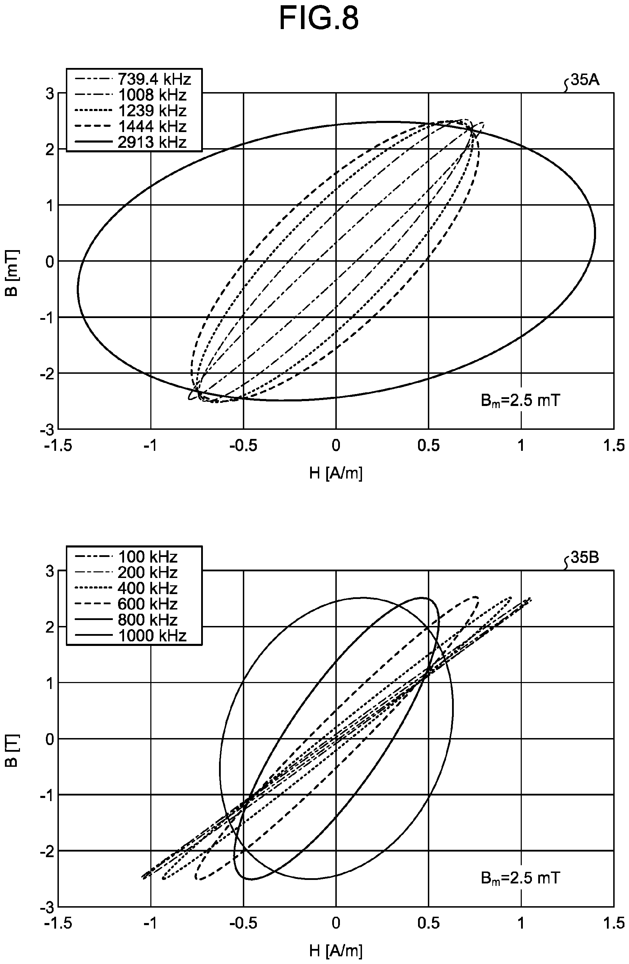

FIG. 8 presents charts each illustrating an example of a measurement result obtained from a BH loop experiment. FIG. 8 presents a measurement result 35A and a measurement result 35B as examples. The measurement result 35A is a measurement result obtained when the thickness h of the inside of the crystal grain is 3 nm, whereas the measurement result 35B is a measurement result obtained when the thickness h of the inside of the crystal grain is 13 nm.

The calculation result 30A in FIG. 7 corresponds to the measurement result 35A in FIG. 8. The calculation result 30B in FIG. 7 corresponds to the measurement result 35B in FIG. 8. Because the calculation results and the measurement results are similar to each other, it is confirmed that it was possible to accurately simulate the BH loops.

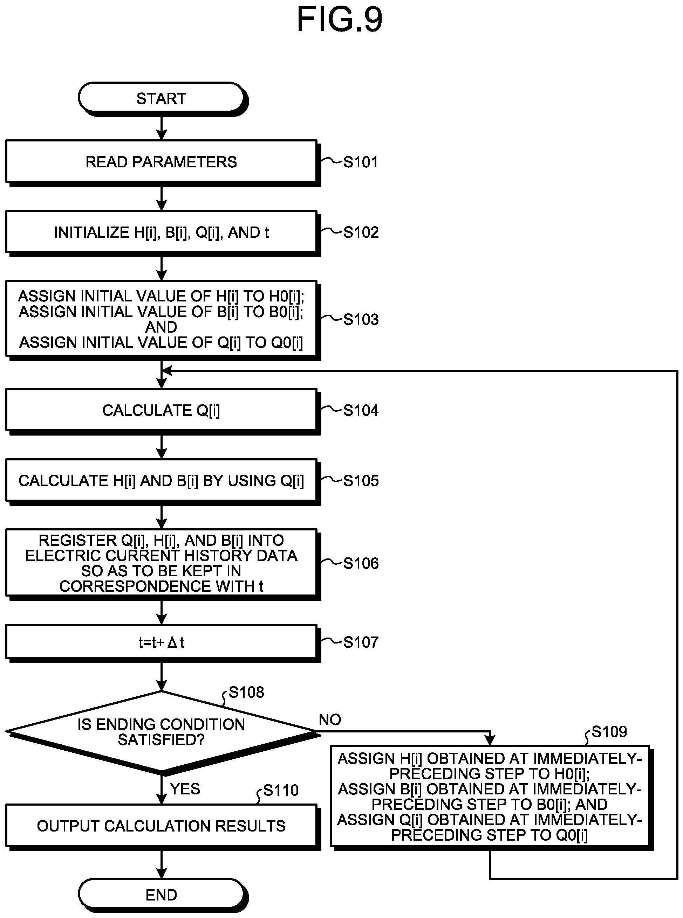

Next, an example of a processing procedure performed by the magnetic material simulation apparatus 100 according to the present embodiment will be explained. FIG. 9 is a flowchart illustrating the processing procedure performed by the magnetic material simulation apparatus according to the present embodiment. As illustrated in FIG. 9, the calculating unit 142 included in the magnetic material simulation apparatus 100 reads the parameters 131 (step S101).

The calculating unit 142 initializes H[i], B[i], Q[i], and t (step S102). The calculating unit 142 assigns the initial value of H[i] to H0[i]. The calculating unit 142 assigns the initial value of B[i] to B0[i]. The calculating unit 142 assigns the initial value of Q[i] to Q0[i] (step S103).

The calculating unit 142 calculates the electric charge Q[i] (step S104). At step S104, the calculating unit 142 calculates the electric charge Q[0] based on Expression (33). The calculating unit 142 calculates the electric charge values Q[1] to Q[NL-2] based on Expression (36). The calculating unit 142 calculates the electric charge Q[NL-1] based on Expressions (39) and (40).

By using the electric charge Q[i], the calculating unit 142 calculates the magnetic field H[i] and the magnetic flux density B[i] (step S105). At step S105, the calculating unit 142 calculates the magnetic field H[0] and the magnetic flux density B[0] based on Expressions (32) and (34). The calculating unit 142 calculates the magnetic field values H[1] to H[NL-2] and the magnetic flux density values B[1] to B[NL-2] based on Expressions (35) and (37). The calculating unit 142 calculates the magnetic field H[NL-1] and the magnetic flux density B[NL-1] based on Expressions (38) and (41).

The calculating unit 142 registers the values of Q[i], H[i], and B[i] into the electric current history data 132 so as to be kept in correspondence with the time t (step S106). By calculating t = t + Δt, the calculating unit 142 updates the time t (step S107).

When the ending condition is not satisfied (step S108: No), the calculating unit 142 proceeds to step S109. On the contrary, when the ending condition is satisfied (step S108: Yes), the calculating unit 142 proceeds to step S110. For example, the ending condition may be a condition that the process is ended when the time t is equal to or larger than a threshold value. Alternatively, any other ending condition may be used.

The process at step S109 will be explained. The calculating unit 142 assigns H[i] obtained at the immediately-preceding step to H0[i]. The calculating unit 142 assigns B[i] obtained at the immediately-preceding step to B0[i]. The calculating unit 142 assigns Q[i] obtained at the immediately-preceding step to Q0[i] (step S109). At step S109, H[i], B[i], and Q[i] obtained at the immediately-preceding step correspond to H[i], B[i], and Q[i] that are kept in correspondence with the time "t - Δt" in the electric current history data 132.

The process at step S110 will be explained. The display controlling unit 143 included in the magnetic material simulation apparatus 100 outputs the calculation results to the display unit 120 (step S110). At step S110, the display controlling unit 143 generates the calculation results of the BH loop explained with reference to FIG. 7 and causes the display unit 120 to display the generated calculation results.

Next, advantageous effects of the magnetic material simulation apparatus 100 according to the present embodiment will be explained. By repeatedly performing the process of calculating the magnetic field H and the magnetic flux density B of the crystal grain model at the specific points in time based on the electric charge Q applied to a unit of the crystal grain model of the magnetic material and updating the electric current history data 132, the magnetic material simulation apparatus 100 is able to accurately calculate the losses of the magnetic material without spending much time. For example, the relationship between the magnetic field H, the electric charge Q, and the magnetic flux density B corresponds to the losses of the magnetic material.

For example, because the magnetic material simulation apparatus 100 according to the present embodiment uses the electric charge Q applied to the crystal grain model without using any mesh finer than the crystal grain model, the magnetic material simulation apparatus 100 is able to eliminate the process of re-measuring the frequency dependency corresponding to the mesh size. For example, because the magnetic material simulation apparatus 100 does not perform the simulation by calculating finely-divided sections of a mesh on the inside of the crystal grains, it is possible to perform the calculation with fewer parameters and to thus reduce the calculation costs. Further, even with the fewer parameters, it is possible to express the losses dependent on the shape of the magnetic material (e.g., the losses observed in the ferrite core) by using the model.

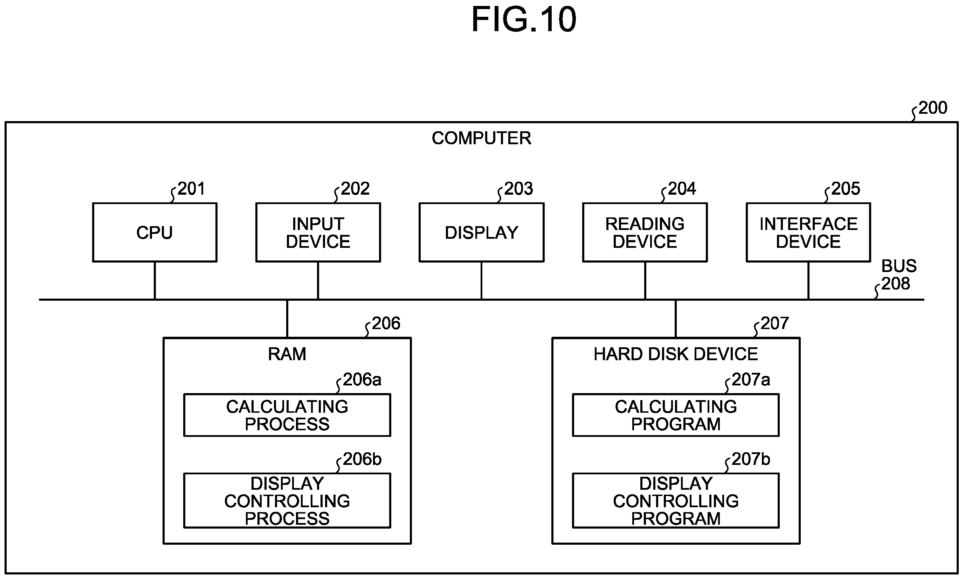

Next, an example of a hardware configuration of a computer configured to realize the same functions as those of the magnetic material simulation apparatus 100 described in the embodiment above will be explained. FIG. 10 is a diagram illustrating an example of the hardware configuration of the computer configured to realize the same functions as those of the magnetic material simulation apparatus.

As illustrated in FIG. 10, a computer 200 includes: a CPU 201 configured to execute various types of computing processes; an input device 202 configured to receive an input of data from the user; and a display 203. Further, the computer 200 includes a reading device 204 configured to read a computer program (hereinafter, "program") and the like from a storage medium and an interface device 205 configured to exchange data with another computer via a network. Further, the computer 200 includes a RAM 206 configured to temporarily store therein various types of information and a hard disk device 207. Further, the devices 201 to 207 are connected to a bus 208.

The hard disk device 207 includes a calculating program 207a and a display controlling program 207b. The CPU 201 reads the calculating program 207a and the display controlling program 207b and loads the read programs into the RAM 206.

The calculating program 207a functions as a calculating process 206a. The display controlling program 207b functions as a display controlling process 206b. Processes implemented by the calculating process 206a correspond to the processes performed by the calculating unit 142. Processes implemented by the display controlling process 206b correspond to the processes performed by the display controlling unit 143.

The programs 207a and 207b do not necessarily have to be stored in the hard disk device 207 from the beginning. For example, the programs may be stored in a "portable physical medium" such as a Flexible Disk (FD), a Compact Disk Read-Only Memory (CD-ROM), a Digital Versatile Disk (DVD), a magneto-optical disk, an Integrated Circuit (IC) card, or the like to be inserted into the computer 200. Further, the computer 200 may read and execute the programs 207a and 207b.

It is possible to accurately calculate the losses of the magnetic material without spending much time on the calculation.

## Claims

1. A magnetic material simulation program (207a) that causes a computer (200) to execute a process comprising:

   calculating a second electric charge at a specific point in time with respect to a crystal grain model obtained by dividing a magnetic material into sections having a predetermined mesh size, based on a parameter related to the crystal grain model, a first electric charge previously applied to the crystal grain model, and a first magnetic field that previously occurred to the crystal grain model;
   calculating a second magnetic field and a second magnetic flux density of the crystal grain model at the specific point in time, based on the parameter, the first electric charge, the second electric charge, and a first magnetic flux density that previously occurred to the crystal grain model;
   recording information related to the second electric charge, the second magnetic field, and the second magnetic flux density into a storage device; and
   repeatedly performing a process of calculating a third electric charge, a third magnetic field, and a third magnetic flux density of the crystal grain model at a following point in time, based on the second electric charge, the second magnetic field, and the second magnetic flux density.

2. The magnetic material simulation program (207a) according to claim 1, wherein the predetermined mesh size corresponds to a size of a crystal grain of the magnetic material.

3. The magnetic material simulation program (207a) according to claim 1 or 2, wherein the parameter related to the crystal grain model includes: a thickness of a crystal grain boundary, an electric conductivity of the crystal grain boundary, an electric conductivity inside a crystal grain, and permittivity of the crystal grain boundary.

4. A magnetic material simulation method comprising:

   calculating a second electric charge at a specific point in time with respect to a crystal grain model obtained by dividing a magnetic material into sections having a predetermined mesh size, based on a parameter related to the crystal grain model, a first electric charge previously applied to the crystal grain model, and a first magnetic field that previously occurred to the crystal grain model;
   calculating a second magnetic field and a second magnetic flux density of the crystal grain model at the specific point in time, based on the parameter, the first electric charge, the second electric charge, and a first magnetic flux density that previously occurred to the crystal grain model;
   recording information related to the second electric charge, the second magnetic field, and the second magnetic flux density into a storage device; and
   repeatedly performing a process of calculating a third electric charge, a third magnetic field, and a third magnetic flux density of the crystal grain model at a following point in time, based on the second electric charge, the second magnetic field, and the second magnetic flux density.

5. The magnetic material simulation method according to claim 4, wherein the predetermined mesh size corresponds to a size of a crystal grain of the magnetic material.

6. The magnetic material simulation method according to claim 4 or 5, wherein the parameter related to the crystal grain model includes: a thickness of a crystal grain boundary, an electric conductivity of the crystal grain boundary, an electric conductivity inside a crystal grain, and permittivity of the crystal grain boundary.

7. A magnetic material simulation apparatus (100) comprising:

a storage unit (130) configured to record therein information related to a parameter related to a crystal grain model obtained by dividing a magnetic material into sections having a predetermined mesh size, a first electric charge previously applied to the crystal grain model, a first magnetic field that previously occurred to the crystal grain model, and a first magnetic flux density that previously occurred to the crystal grain model; and
a calculating unit (142) configured to

calculate a second electric charge of the crystal grain model at a specific point in time, based on the parameter, the first electric charge, and the first magnetic field,
calculate a second magnetic field and a second magnetic flux density of the crystal grain model at the specific point in time, based on the parameter, the first electric charge, the second electric charge, and the first magnetic flux density,
record information related to the second electric charge, the second magnetic field, and the second magnetic flux density into the storage unit (130), and
repeatedly perform a process of calculating a third electric charge, a third magnetic field, and a third magnetic flux density of the crystal grain model at a following point in time, based on the second electric charge, the second magnetic field, and the second magnetic flux density.

8. The magnetic material simulation apparatus (100) according to claim 7, wherein the predetermined mesh size corresponds to a size of a crystal grain of the magnetic material.

9. The magnetic material simulation apparatus (100) according to claim 7 or 8, wherein the parameter related to the crystal grain model includes: a thickness of a crystal grain boundary, an electric conductivity of the crystal grain boundary, an electric conductivity inside a crystal grain, and permittivity of the crystal grain boundary.

# FIG.1

# FIG.2

# FIG.3

# FIG.4

# FIG.5

131

| | |
|---|---|
| THICKNESS OF CRYSTAL GRAIN BOUNDARY: D | OO [nm] |
| THICKNESS OF INSIDE OF CRYSTAL GRAIN (FERRITE CORE): h | OO [nm] |
| SPECIFIC CONDUCTIVITY OF CRYSTAL GRAIN BOUNDARY: $\varepsilon$ | OO |
| ELECTRIC CONDUCTIVITY OF CRYSTAL GRAIN BOUNDARY: $\sigma_{GB}$ | OO [$\Omega^{-1}m^{-1}$] |
| ELECTRIC CONDUCTIVITY INSIDE OF CRYSTAL GRAIN: $\sigma_{L}$ | OO [$\Omega^{-1}m^{-1}$] |
| DIMENSION RATIO: r (r=D/L) | OO |
| MAGNETIC PERMEABILITY OF CRYSTAL GRAIN BOUNDARY SURFACE: $\mu$ | OO [H/m] |
| MAGNETIC PERMEABILITY IN VACUUM: $\mu_0$ | OO [H/m] |
| PARAMETER INDICATING DEGREE OF UNLIKELINESS TO BE MAGNETIZED BY DOMAIN WALL DISPLACEMENT: $c_{\beta}$ | OO |

# FIG.6

132

| TIME | ELECTRIC CHARGE Q | MAGNETIC FIELD H | CURRENT DENSITY B |
|---|---|---|---|
| t1 | Q[0], Q[1], . . . , AND Q[NL-1] CORRESPONDING TO TIME t1 | H[0], H[1], . . . , AND H[NL-1] CORRESPONDING TO TIME t1 | B[0], B[1], . . . , AND B[NL-1] CORRESPONDING TO TIME t1 |
| t2 | Q[0], Q[1], . . . , AND Q[NL-1] CORRESPONDING TO TIME t2 | H[0], H[1], . . . , AND H[NL-1] CORRESPONDING TO TIME t2 | B[0], B[1], . . . , AND B[NL-1] CORRESPONDING TO TIME t2 |
| t3 | Q[0], Q[1], . . . , AND Q[NL-1] CORRESPONDING TO TIME t3 | H[0], H[1], . . . , AND H[NL-1] CORRESPONDING TO TIME t3 | B[0], B[1], . . . , AND B[NL-1] CORRESPONDING TO TIME t3 |
| . . . | | | |

# FIG.7

# FIG.8

# FIG.9

START

READ PARAMETERS —S101

INITIALIZE H[i], B[i], Q[i], AND t —S102

ASSIGN INITIAL VALUE OF H[i] TO H0[i];
ASSIGN INITIAL VALUE OF B[i] TO B0[i];
AND
ASSIGN INITIAL VALUE OF Q[i] TO Q0[i] —S103

CALCULATE Q[i] —S104

CALCULATE H[i] AND B[i] BY USING Q[i] —S105

REGISTER Q[i], H[i], AND B[i] INTO
ELECTRIC CURRENT HISTORY DATA
SO AS TO BE KEPT IN
CORRESPONDENCE WITH t —S106

$t=t+\Delta t$ —S107

IS ENDING CONDITION SATISFIED? S108

NO

S109
ASSIGN H[i] OBTAINED AT IMMEDIATELY-
PRECEDING STEP TO H0[i];
ASSIGN B[i] OBTAINED AT IMMEDIATELY-
PRECEDING STEP TO B0[i]; AND
ASSIGN Q[i] OBTAINED AT IMMEDIATELY-
PRECEDING STEP TO Q0[i]

YES S110

OUTPUT CALCULATION RESULTS

END

# FIG.10

Europäisches
Patentamt

European
Patent Office

Office européen
des brevets

# EUROPEAN SEARCH REPORT

Application Number

EP 17 19 8265

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 2 891 996 A1 (FUJITSU LTD [JP]) 8 July 2015 (2015-07-08) * paragraphs [0001] - [0003], [0015], [0038], [0041] * * the whole document * | 1-9 | INV. G06F17/50 |
| X | VAN DE WIELE BEN ET AL: "Fast numerical three-dimensional scheme for the simulation of hysteresis in ferromagnetic grains", JOURNAL OF APPLIED PHYSICS, AMERICAN INSTITUTE OF PHYSICS, US, vol. 101, no. 7, 10 April 2007 (2007-04-10), pages 73909-073909, XP012098233, ISSN: 0021-8979 * section II; figures 1,2 * * abstract * * the whole document * | 1-9 | |
| A | ALESSANDRO MAGNI ET AL: "Domain Wall Processes, Rotations, and High-Frequency Losses in Thin Laminations", IEEE TRANSACTIONS ON MAGNETICS, IEEE SERVICE CENTER, NEW YORK, NY, US, vol. 48, no. 11, 1 November 2012 (2012-11-01), pages 3796-3799, XP011468928, ISSN: 0018-9464, DOI: 10.1109/TMAG.2012.2196985 * abstract * * the whole document * | 1-9 | TECHNICAL FIELDS SEARCHED (IPC) G06F |

The present search report has been drawn up for all claims

| Place of search | Date of completion of the search | Examiner |
|---|---|---|
| Munich | 19 March 2018 | Dapp, Wolfgang |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

  .....................................................................................................
& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 17 19 8265

This annex lists the patent family members relating to the patent documents cited in  the above-mentioned European search report.
The members are as contained in the European Patent Office EDP file on
The European Patent Office is in no way liable for these particulars which are merely given for the purpose of information.

19-03-2018

| Patent document cited in search report | | Publication date | Patent family member(s) | | Publication date |
|---|---|---|---|---|---|
| EP  2891996 | A1 | 08-07-2015 | EP | 2891996 A1 | 08-07-2015 |
| | | | JP | 6015761 B2 | 26-10-2016 |
| | | | JP | WO2014033888 A1 | 08-08-2016 |
| | | | US | 2015168502 A1 | 18-06-2015 |
| | | | WO | 2014033888 A1 | 06-03-2014 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **F. FIORILLO et al.** Eddy-Current Losses in Mn-Zn Ferrites. *IEEE Transactions on Magnetics,* 2014, vol. 50 (1), 6300109